# EUROPÄISCHE PATENTSCHRIFT

(11) **EP 3 068 593 B1**
(45) Veröffentlichungstag und Bekanntmachung des Hinweises auf die Patenterteilung: **21.10.2020**
(21) Anmeldenummer: 14830936.2
(22) Anmeldetag: 15.11.2014
(51) Int. Cl.: B25J 15/02

(54) **GREIFVORRICHTUNG MIT SEPARATEN FÜHRUNGSSCHIENEN**
GRIPPING DEVICE WITH SEPARATE GUIDING RAILS
DISPOSITIF DE PRÉHENSION COMPRENANT DES RAILS DE GUIDAGE SÉPARÉS

(30) Priorität: 15.11.2013 DE 102013019034
(43) Veröffentlichungstag der Anmeldung: 21.09.2016
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2014/000587
(87) Internationale Veröffentlichungsnummer: WO 2015/070840

(56) Entgegenhaltungen:
- EP-A1- 0 997 655
- JP-A- H07 178 685
- JP-A- 2009 226 506
- US-A1- 2010 052 348

## Beschreibung

Die Erfindung betrifft eine Greifvorrichtung mit bewegliche Greifelemente tragenden Schlitten, wobei die Schlitten in Greifrichtung der Greifelemente hintereinander in einer gemeinsam genutzten, in einem Grundkörper angeordneten, zu den Greifelementen hin zumindest bereichsweise offenen Führungsnut parallel zur Greifrichtung zwischen einer Öffnungs- und Schließstellung antreibbar geführt und quer zur Greifrichtung allseitig abstützend gelagert sind.

Aus der DE 103 44 255 A1 ist eine derartige Parallelgreifvorrichtung bekannt. Bei diesem Gegenstand sind die Schlitten direkt im Grundkörper gelagert.

Die EP 0 997 655 A1 beschreibt eine Parallelgreifvorrichtung, bei der in einer gehäuseseitigen Führungsnut zwei greifelementetragende: Schlitten gelagert sind. Zwischen dem Gehäuse und den Schlitten sind beidseitig jeweils Führungseinheiten angeordnet, die die Schlitten wälzgelagert führen. Dazu sind pro Schlittenseite sowohl im Gehäuse als auch in Schlitten zwei übereinanderliegende zylindrische Stahlstäbe angeordnet. Zwischen den vier Stahlstäben einer Schlittenseite sind kugelförmige Wälzkörper eingelegt. Die Führungseinheiten weisen jeweils eine in einer Schienenführungsnut der Führungsnutwandung befestigte Schlittenführungsschiene.

Aus der JP 2009 226506 A ist eine weitere Parallelgreifvorrichtung bekannt, die zwei in einer Führungsnut gelagerte Schlitten aufweist, wobei an jeder der beiden Wandungen der Führungsnut eine Schienenführungsnut angeordnet ist, an der eine Schienenführungsschiene befestigt ist.

Der vorliegenden Erfindung liegt die Problemstellung zugrunde, eine Greifvorrichtung zu entwickeln, die bei großer Klemmkraft einen geringen Bauraumbedarf und eine geringe Eigenmasse hat. Zudem soll das Führungssystem hoch belastbar und verschleißfest gefertigt sein.

Diese Problemstellung wird mit den Merkmalen des Hauptanspruchs gelöst. Dabei weist die offene Führungsnut zwei einander gegenüberliegende Führungsnutwandungen auf. In jeder Führungsnutwandungen ist eine Schienenführungsnut mit planem Grund angeordnet. In jeder Schienenführungsnut ist eine Schlittenführungsschiene befestigt. Der Bereich des Querschnittes der Schlittenführungsschiene, der aus der Schienenführungsnut herausragt, weist einen trapezförmigen Querschnitt auf.

Besonders klein bauende Greifvorrichtungen benötigen zum Greifen von Werkstücken Greifbacken, die im Verhältnis zu den relativ kurzen, die Greifbacken tragenden und bewegenden Schlitten sehr lang sind. Durch die kurze Führungslänge der Schlitten im Gerätegehäuse der Greifvorrichtung sind die Greifkräfte durch erhöhten Führungsverschleiß und einem damit zwangsläufig verbundenen vergrößerten Führungsspiel unnötig beschränkt. Mit der vorliegenden Erfindung wird die Möglichkeit geschaffen, in Gerätegehäuse bzw. Grundkörper separate Führungsschienen zur Lagerung und Führung der Schlitten und/oder Greifbacken einzubauen. Je nach Greifaufgabe können Führungsschienen eingesetzt werden, die z.B. tragfähig sind oder eine verschleißfeste oder reibungsarme Oberfläche aufweisen. Je nach Werkstoffwahl lassen sich diese Eigenschaften auch kombinieren.

Im Ausführungsbeispiel sind die Schlitten nur beispielhaft hintereinander in nur einer Führungsschiene gelagert.

Angetrieben werden die Schlitten über ein Getriebe, z.B. ein Doppelschiebekeilgetriebe, auf das z.B. eine pneumatisch oder hydraulisch betriebene Zylinder-Kolbeneinheit wirkt. Dabei wird die Richtung der Linearbewegung der Kolbenstange mittels eines Doppelschiebekeils oder mittels zwei Schiebekeile beispielsweise um ca. 90 Winkelgrade umgelenkt.

Anstelle des Doppelschiebekeilgetriebes können entsprechend auch Kurven-, Hebel-, Räder- oder Zugmittelgetriebe eingesetzt werden. Auch Getriebekombinationen sind möglich. Ferner ist die Anzahl der Greifbacken bzw. Schlitten nicht auf zwei beschränkt. Bei drei-, vier- oder Mehrbackengreifern werden in den beispielsweise sternförmig oder parallel angeordneten Führungsnuten pro Nut in der Regel zwei Schlittenführungsschienen vorgesehen, deren Werkstoff belastbarer ist als der des Grundkörpers. Es ist aber auch möglich pro Führungsnut nur eine, drei oder mehrere einzelne Schlittenführungsschienen einzubauen.

Weitere Einzelheiten der Erfindung ergeben sich aus den Unteransprüchen und der nachfolgenden Beschreibung schematisch dargestellter Ausführungsformen.
- Figur 1:: Perspektivische Ansicht eines Parallelgreifers;
- Figur 2:: Längsschnitt durch den Parallelgreifer nach Figur 1, jedoch mit Greifbacken. Der rechte Greifbacken ist geöffnet;
- Figur 3:: Perspektivische Ansicht des Grundkörpers des Parallelgreifers nach Figur 1;
- Figur 4:: Perspektivische Ansicht des unteren Deckels mit aufgelegter Flachdichtung;
- Figur 5:: Perspektivische Ansicht des Kolbens ohne Kolbendichtung von unten;
- Figur 6:: Querschnitt mittig durch den Parallelgreifer;
- Figur 7:: Querschnitt durch den Parallelgreifer im Bereich der vertikalen Befestigungsbohrungen;
- Figur 8:: Perspektivische Ansicht der Schlitten, der Führungsabdichtungen und des Doppelkeils von oben;
- Figur 9:: Perspektivische Ansicht der Schlitten, der Führungsabdichtungen und des Doppelkeils von unten;
- Figur 10:: Teilquerschnitt durch die Führungsnutdichtung quer zur Richtung der Führungsnut, vergrößert;
- Figur 11:: Teilquerschnitt durch die Führungsnutdichtung parallel zur Richtung der Führungsnut, vergrößert.

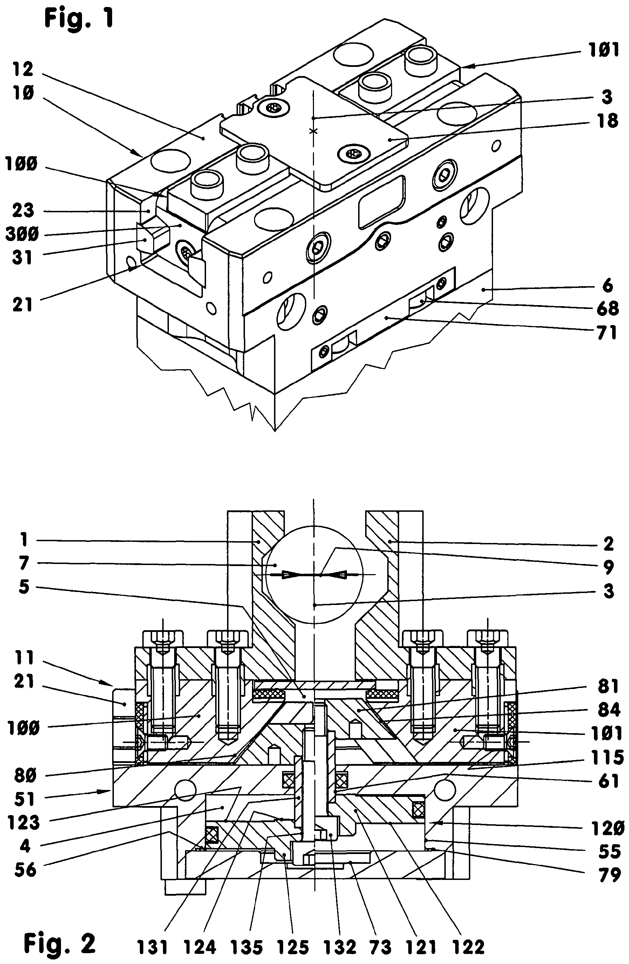

Die Figur 1 zeigt eine Parallelgreifvorrichtung mit zwei jeweils auf Schlitten (100, 101) sitzenden Greifbacken (1, 2). Die in ihrer Längsrichtung beweglichen Schlitten (100, 101) sind in einem Gehäuse bzw. Grundkörper (10) in einer Führungsnut (21) z.B. gleitgelagert geführt. Das die Führungsnut aufnehmende Gehäuse (10) umgibt ferner eine z.B. doppeltwirkende Zylinder-Kolben-Einheit (120). Die Zylinder-Kolben-Einheit wirkt über ein Doppelschiebekeilgetriebe (80) auf die Schlitten (100, 101). In Figur 1 ist die Parallelgreifvorrichtung über ihren Grundkörper (10) auf einem sie tragenden Maschinen- bzw. Handhabungsgeräteteil (6) montiert.

Die Figur 2 stellt die Parallelgreifvorrichtung im Längsschnitt mit zwei aufgeschraubten Greifbacken (1, 2) dar. Die Greifbacken sollen ein z.B. zylinderförmiges Werkstück (7) greifen. Der Greifbacken (1) der linken Vorrichtungsseite liegt am Werkstück (7) an, während der Greifbacken (2) der rechten Vorrichtungsseite in geöffneter Position dargestellt ist. Im Gegensatz zur Darstellung nach Figur 2 bewegen sich die Greifbacken (1, 2) getriebebedingt immer zwangsläufig synchron aufeinander zu oder voneinander weg.

Der z.B. im Wesentlichen quaderförmige Grundkörper (10) der Parallelgreifvorrichtung besteht aus einem oberen Führungsabschnitt (11) und einem unteren Antriebsabschnitt (51). Er ist beispielsweise aus der Aluminiumlegierung AlMgSi1 gefertigt. Die Länge des Grundkörpers (10) ist z.B. fast doppelt so lang wie seine Breite und die Grundkörperhöhe. Im Ausführungsbeispiel ist der Grundkörper (10) 50 mm lang. Bei dieser Baugröße beträgt der maximale Hub jedes Schlittens (100, 101) bzw. Greiferbackens (1, 2) z.B. 2,625 mm.

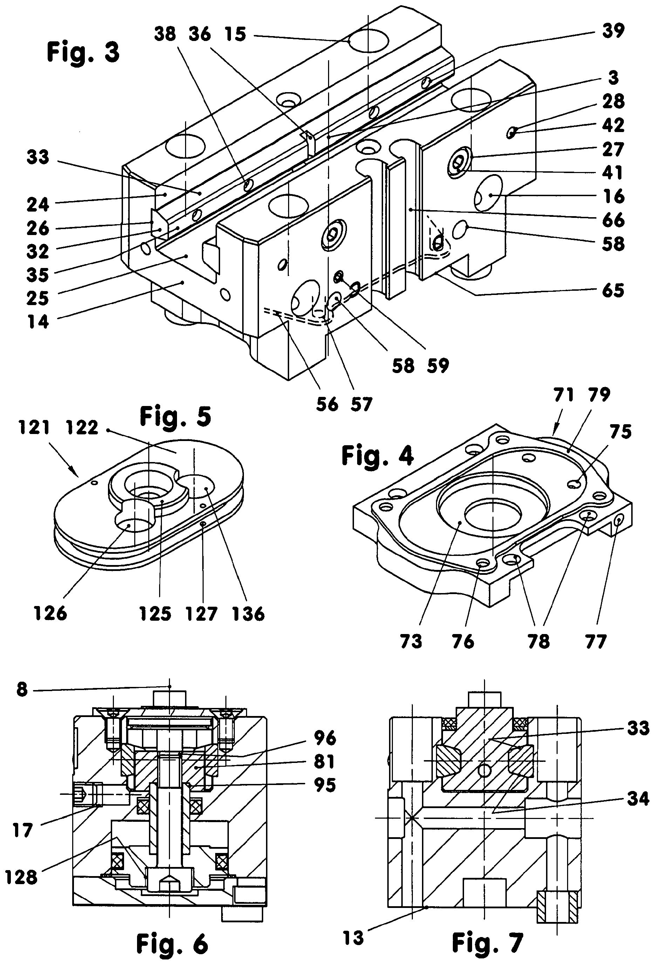

Der Führungsabschnitt (11) nimmt zentral die nach oben - zu den Greifelementen (1, 2) hin - offene Führungsnut (21) auf, vgl. Figur 3, deren z.B. rechteckiger Querschnitt eine Breite von 10,7 mm und Höhe von 9,3 mm misst. In den planen Seitenwandungen (23, 24) der Führungsnut (21) ist jeweils eine flache, z.B. 0,65 mm Tiefe und 4 mm breite Schienenführungsnut (26) zur späteren Aufnahme einer Führungsschiene (31, 32) eingearbeitet. Die einzelne Schienenführungsnut (26) hat einen rechteckigen Querschnitt, einen planen Grund und z.B. plane Seitenwandungen. Die Schienenführungsnuten (26) erstrecken sich über die gesamte Länge des Grundkörpers (10).

Jede Führungsschiene (31, 32) ist hier eine aus einem nichtrostenden Stahl, z.B. aus einem X90CrMoV18, gefertigte, im Wesentlichen trapezförmige Stange. Die Breite der sich z.B. über die Länge des Grundkörpers (10) erstreckende Führungsschiene (31, 32) beträgt im Ausführungsbeispiel 4 mm. Die Höhe der Führungsschiene (31, 32) misst 75% ihrer Breite. Aufgund der hohen Festigkeit einer derartigen Führungsschiene (31, 32) können die Schlitten größere Momente auf den Grundkörper (10) übertragen. Demzufolge kann die Greifvorrichtung größere Greifkräfte auf das aufzunehmende Werkstück (7) ausüben.

Jede Führungsschiene (31, 32) hat einen sechseckigen Querschnitt und weist zwei einander spiegelsymmetrisch gegenüberliegende Tragflanken (33, 34) auf, die einen Winkel von 30 Winkelgraden einschließen. Die Spiegelebene halbiert die Führungsschiene (31, 32) entlang ihrer horizontalen Längsmittenebene. Die Tragflanken (33, 34) überdecken mindestens 75 % der Führungsschienenhöhe, wobei die Führungsschienenhöhe parallel zu den Mittellinien der die Führungsschiene (31, 32) positionierenden Passstifte (42) gemessen wird. Zwischen den Tragflanken (33, 34) und der dazwischen eingeschlossenen, zur vertikalen Mittenlängsebene (8) parallelen freien Fläche (35) befinden sich Kantenabrundungen, deren Radien jeweils 0,5 mm messen.

Mindestens eine der Führungsschiene (31, 32) weist mittig eine Quernut (36) mit der Breite von z.B. 1,2 mm und der Tiefe von z.B. 1,4 mm auf. Diese Quernut (36) dient der zusätzlichen verschleißfesten Führung des im Doppelschiebekeilgetriebe (80) verwendeten Doppelschiebekeils (81). Ggf. können die einzelnen Führungsschiene (31, 32) auch aus zwei oder mehreren hintereinander angeordneten Abschnitten aufgebaut sein.

Im Ausführungsbeispiel sind die Führungsschienen (31, 32) jeweils mit zwei Senkschrauben (41) am Grundkörper (10) befestigt, vgl. Figur 1 und 3. Vorab werden die Führungsschienen (31, 32) jeweils mit Hilfe von zwei Passstiften (42) am Grundkörper (10) positioniert. Die Passstifte sind jeweils im Bereich zwischen den Verschraubungen und der nächstgelegenen Grundkörperstirnseite (14) angeordnet. Die Bohrungen (39) für die Passstifte (42) und die Gewindebohrungen (38) liegen jeweils auf der horizontalen Mittenlängsebene der Führungsschienen (31, 32).

Um ein maximales Führungsspiel von weniger als 0,05 mm zwischen den Führungsschienen (31, 32) und den Schlitten (100, 101) zu erzielen, können die Führungschienen nach dem Einbau in den Grundkörper (10) durch Hartmetallfräsen oder Überschleifen feinbearbeitet werden.

Der unterhalb des Führungsabschnittes (11) gelegene Antriebsabschnitt (31) nimmt im Wesentlichen die Zylinder-Kolben-Einheit (120) und die betätigungsmittelführenden Kanäle und Durchbrüche auf. In den seitlichen Bereichen unterhalb des Führungsabschnittes (11) ist der Grundkörper (10) beidseitig um circa 12 % der Gesamtgrundkörperlänge auf einer Höhe von 38,3 % der Grundkörpergesamthöhe verkürzt ausgebildet.

Die Unterseite (13) des Grundkörpers (10) hat eine z.B. 3,5 mm tiefe, hier 12-eckige Deckelausnehmung (65). Die Deckelausnehmung erstreckt sich von der vorderen bis zur hinteren Längsseitenwandung des Grundkörpers (10). Von der Deckelausnehmung (65) aus ragt eine z.B. 7 mm tiefe Zylinderausnehmung (55) in den Grundkörper (10) in Richtung der Führungsnut (21) hinein, vgl. Figur 2. Die Zylinderausnehmung (55) hat hier einen ovalen Querschnitt, dessen Länge z.B. 54 % der Grundkörpergesamtlänge entspricht. Die Breite der Zylinderausnehmung (55) misst z.B. 53,7 % ihrer Länge. Die beiden Radien des ovalen Querschnitts entsprechen der halben Breite der Zylinderausnehmung (55). Um die Zylinderausnehmung (55) herum befindet sich eine umlaufende Dichtsitzvertiefung (56) mit planem Grund. Die darin anzuordnende Flachdichtung (79) ist in Figur 4 auf dem Deckel (71) liegend dargestellt.

Im Bereich der Dichtsitzvertiefung (56) sind vier Bodenbohrungen (57) angeordnet, von denen je zwei eine Druckluftbohrung (58) schneiden. Letztere sind zwei senkrecht zu den langen Grundkörperseitenwandungen angeordnete Bohrungen. Nach Figur 3 ist die eine mit einem "O" für "Open" und die andere mit einem "C" für "Close" bezeichnet. Die Bodenbohrung (57), die die mit "C" bezeichnete Druckluftbohrung (58) schneidet, schneidet eine weitere über der Druckluftbohrung (58) gelegene Querbohrung (59). Letztere ist mit einem Gewindestift dicht verschlossen. Über diese Querbohrung (59) kann die Zylinderausnehmung (55) in ihrer Bodennähe mit Druckluft versorgt werden.

Im Zentrum des Bodens der Zylinderausnehmung (55) befindet sich eine Durchgangsbohrung (61), die die Zylinderausnehmung (55) mit der Führungsnut (21) verbindet. Mittig weist die Durchgangsbohrung (61) einen Einstich zur Aufnahme eines Kolbenstangendichtringes auf.

Zur Befestigung des Grundkörpers (10) an einem Maschinenschlitten (6) verfügt dieser über vier vertikal Bohrungen (15) und zwei Querdurchgangsbohrungen (16). In Figur 1 werden speziell die vertikalen Bohrungen (15) zur Befestigung benutzt. Bis auf zwei einander diagonal gegenüberliegenden Bohrungen sind alle anderen Befestigungsbohrungen (15, 16) mit den zu den jeweiligen Befestigungsschrauben passenden Senkungen ausgestattet.

Der Grundkörper (10) weist auf der in Figur 3 dargestellten großen Seitenwandung im mittleren Bereich zwei auch zu dieser Seitenwandung hin offene Sensorausnehmungen (66) auf. Ihre Mittellinien sind parallel zur Mittellinie (3) der Vorrichtung orientiert. Ihre großteils u-förmigen Querschnitte werden im Bereich der Seitenwandung durch beidseits - als Fixierschutz für einsetzbare Kolbenpositionssensoren - vorspringende Hintergriffe verengt.

Der Deckel (71), der mit geringem Spiel in die 12-eckige Deckelausnehmung (65) passt, vgl. Figur 4, hat zentral eine zweistufige Vertiefung (73), in die der Kolben (121) des pneumatischen Antriebs (80) in der Greiferschließstellung partiell hineinragen kann. Um die Vertiefung (73) sind vier Befestigungsbohrungen (78) angeordnet, über die der Deckel (71) mit dem Grundkörper (10), unter Zwischenlage der Flachdichtung (79), dicht mit vier Zylinderschrauben (68), vgl. Figur 1, verschraubt wird. Zur Aufnahme der Schraubenköpfe der Zylinderschrauben (68) weist der Deckel (71) Senkungen oder Einfräsungen auf, die in den Bereich der Längsseitenwandungen reichen, vgl. Figuren 1 und 3.

Speziell im Bereich der hinteren, gewölbten Seitenwandung des Deckels (71) hat dieser z.B. vier zum Grundkörper (10) hin orientierte Sacklochbohrungen (76), von denen zwei sich in der elastischen Flachdichtung (79) fortsetzen, vgl. Figur 4. Je zwei Sacklochbohrungen (75) münden in eine lange durchgehende Querbohrung (77), die an den Längsseitenwandungen des Deckels (71) mit Gewindestiften verschlossen ist. Die nach Figur 4 innerhalb der Umrandung der Flachdichtung (79) gelegenen Sacklochbohrungen (75) dienen, während des Greiferlösevorganges, als Auslassbohrungen für die Druckluft. Diese Druckluft wird über die mit "O" gekennzeichnete Bohrung (58) in den Grundkörper (10) gepresst, um von dort über die vertikale Bodenbohrung (57) durch die Flachdichtung (79) hindurch in die Querbohrung (77) zu gelangen.

In dem von der Zylinderausnehmung (55) und dem Deckel (71) umgebenen Zylinderinnenraum (4) ist ein ovaler Kolben (121) mit seiner zweiteiligen Kolbenstange (131, 132) angeordnet. Der Kolben (121), dessen mittlere Wandstärke im Ausführungsbeispiel weniger als ein Sechstel der Grundkörperhöhe beträgt, hat zentral eine dreistufige Durchgangsbohrung (135), wobei die mittlere Stufe den kleinsten Durchmesser von z.B. 3,2 mm aufweist.

Die kolbenstangenseitige Bohrungsstufe hat zur Aufnahme einer Kolbenstangenhülse (131) einen Durchmesser von 5 mm. Um die Durchgangsbohrung (135) herum hat der Kolben (121) dort einen 0,2 mm hohen scheibenförmigen Vorsprung (124), der als oberer Anschlag des Kolbens (121) dient. Sein zylindrischer Rand kann auch der Innenführung einer Schraubendruckfeder dienen.

Der ovale Kolben (121) besitzt zur Abdichtung gegenüber der Zylinderausnehmungswandung des Grundkörpers (10) einen umlaufenden, in einer Dichtnut gelagerten Quaddichtring. Im Bereich der Dichtnut weist der Kolben (121) mindestens eine Druckausgleichsbohrung (127) auf, deren Mittellinie z.B. parallel zur Mittellinie (3) verläuft und die den Kolben (121) im Bereich der Dichtnut schneidet. Über die mindestens eine Druckausgleichsbohrung (127), deren Durchmesser z.B. 0,7 mm beträgt, gelangt während der Druckluftzufuhr die Druckluft vor den Quaddichtring, um diesen sicher und schnell an der dem Überdruck abgewandten Nutflanke der Dichtnut anzulegen.

Die Kolbenbodenseite (122), vgl. Figur 5, weist ebenfalls einen Vorsprung (125) auf, in dessen zentraler Senkung (128) der Kopf der Kolbenstangenschraube (132) sitzt. Der Kolben (121) hat im vorderen Bereich des Vorsprungs (125) zwei Sacklochbohrungen (126). In diese Sacklochbohrungen werden bei Bedarf Scheibenmagnete (136) für die Kolbenpositionsüberwachung eingeklebt.

Die Kolbenstange (131, 132) besteht hier aus der Kolbenstangenschraube (132), z.B. eine Senkkopfschraube, und einer auf ihr aufgesteckten Kolbenstangenhülse (131). Diese beiden Teile bilden zusammen mit dem Kolben (121) und Doppelschiebekeil (81) des Doppelschiebekeilgetriebes (80) eine formsteife Baugruppe, sobald die Kolbenstangenschraube (132) mittig in eine Senkbohrung (95) des Doppelschiebekeils (81) eingesteckt und in der an die Senkbohrung anschließende Gewindebohrung (96) festgeschraubt wird.

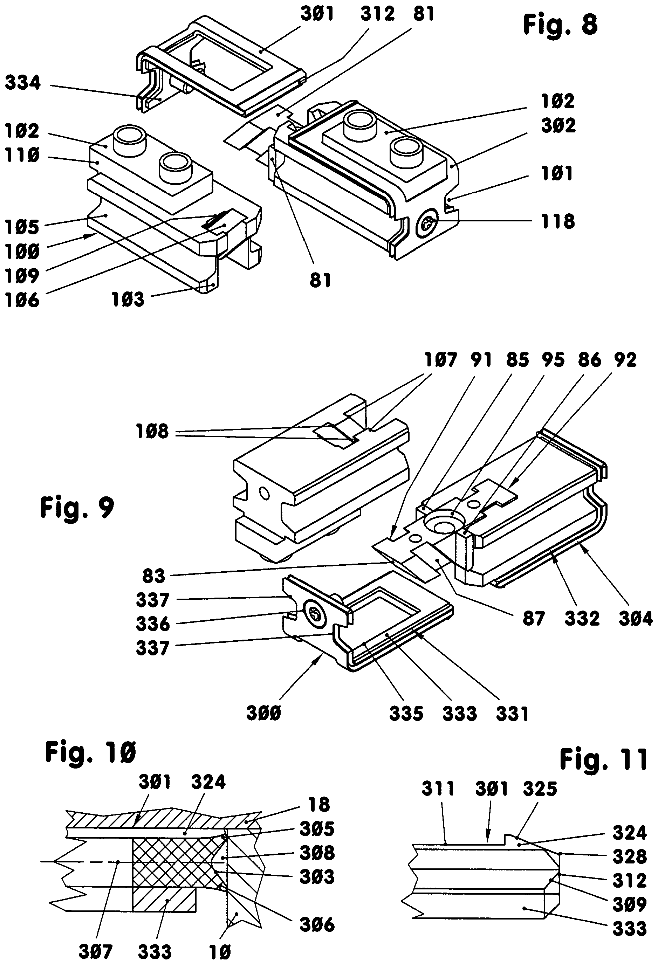

Der Doppelschiebekeil (81), der in der Führungsnut (21) als Teil eines Doppelschiebekeilgetriebes (80) angeordnet ist, ist im Wesentlichen ein vierkantstabartiges Bauteil mit quadratischem Querschnitt. In seinem mittleren Bereich ist beidseitig jeweils ein seitlich senkrecht abstehender Stützsteg (85, 86) angeformt, vgl. Figuren 8 und 9. Der Stützsteg (85, 86), der sich parallel zur Mittellinie (3) über die gesamte Doppelschiebekeilhöhe erstreckt, ist 1,2 mm breit. Er steht 1,8 mm über seine Quadergrundform über.

Der Doppelschiebekeil (81) weist an seinen stirnseitigen Enden jeweils eine im Schiebekeilwinkel abgeschrägte Stirnfläche (83, 84) auf. Der Schiebekeilwinkel liegt z.B. zwischen 20 und 50 Winkelgraden gegenüber der Greifrichtung (9). Im Ausführungsbeispiel beträgt er 50 Winkelgrade.

Parallel zu den abgeschrägten Stirnseiten (83, 84) befinden sich jeweils zwischen einer Stirnseite (83, 84) und einem Stützsteg (85, 86), pro Längsseite des Doppelschiebekeils (81), eine Keilnut (87). Die jeweilige Keilnut (87) ist parallel zu der nächstgelegenen Stirnseite (83, 84) orientiert. Sie hat dabei einen rechteckigen Querschnitt. Der Doppelschiebekeil (81) hat somit pro Längsseite zwei Keilnuten (87). Da er zur vertikalen Mittenlängsebene (8) symmetrisch aufgebaut ist, liegt jeder Keilnut (87) einer Längsseite eine zweite gegenüber. Auf diese Weise bildet jeder stirnseitige Bereich des Doppelschiebekeils (81) einen - im Querschnitt betrachtet - schräg angeordneten T-förmigen Keilsteg (91, 92).

Jeder Keilsteg (91, 92) des Doppelschiebekeils (81) greift formschlüssig in einen in der Führungsnut (21) gelagerten Schlitten (100, 101) ein. Jeder Schlitten ist primär ein quaderförmiger Körper, in den beidseitig Schlittenführungsnuten (105) eingearbeitet sind, mit der der einzelne Schlitten (100, 101) auf den Führungsschienen (31, 32) gleitgelagert ist.

Der einzelne Schlitten (100, 101), dessen Breite z.B. 0,2 mm kleiner ist als die Breite der Führungsnut (21), hat in der dem Doppelschiebekeil (81) zugewandten Stirnfläche (103) eine schräg angeordnete T-Nut (106), mit der der Schlitten (100, 101) den Keilsteg (91, 92) des Doppelschiebekeils (81) mit einem unter 0,1 mm liegenden Spiel umgreift. Nach den Figuren 8 und 9 sind in den Grund der T-Nut (106) mit Schmiermittel befüllbare Schmiertaschen (109) eingearbeitet. Auf der dem Doppelschiebekeil (81) abgewandten Stirnfläche weist der einzelne Schlitten (100, 101) eine Gewindebohrung (115) auf, deren Mittellinie auf der Mittenlängsebene (8) liegt. Über diese Gewindebohrung (115) kann die Führungsnutdichtung (300) befestigt werden.

Auf der Oberseite jedes Schlittens (100, 101) befindet sich ein z.B. quaderförmiger, z.B. 2,8 mm hoher Adapteraufsatz (110), der bei montiertem Schlitten (100, 101) oben um z.B. 1,2 mm - über die Gehäuseoberseite (12) überstehend - aus der Führungsnut (21) herausragt. Zugleich steht der Adapteraufsatz (110) über die jeweils außenliegende, der T-Nut (106) abgewandte Stirnseite um z.B. 1,5 mm über. Die ebene Oberseite (102) des Adapteraufsatzes (110) hat zwei mit Zylindersenkungen ausgestattete Gewindebohrungen, an denen die Greifbacken (1, 2) lösbar befestigt werden. In den Zylindersenkungen stecken Zentrierhülsen zur präzisen, zumindest formschlüssigen Positionierung der Greifbacken (1, 2) auf den Schlitten(100, 101). Ggf. sind dort die Greifbacken (1, 2) auch direkt angeformt oder unlösbar fixiert.

Die Schlitten (100, 101) sind in der Führungsnut (21), vgl. Figur 2, so hintereinander angeordnet, dass sich bei minimalem Greifbackenabstand ihre einander zugewandten Stirnseiten (103) kontaktieren oder zumindest fast berühren.

Der mittlere Bereich der Nutöffnung der Führungsnut (21) ist mit einer z.B. rechteckigen Abdeckplatte (18) verschlossen. Die Abdeckplatte (18) ist so breit ausgelegt, dass die beiden Schlitten (100, 101), in Schließstellung der Greiferbacken (1, 2), diese gerade noch nicht berühren.

Um das Gehäuseinnere (5) und die Führungsschienen (31, 32) vor Schmutz oder sonstigen verschleißfördernden Verunreinigungen zu schützen, werden nach den Figuren 8 und 9 auf den Schlitten (100, 101) winkelförmige Führungsnutdichtungen (300) aufgesetzt und festgeschraubt. Dabei umgibt die einzelne Führungsnutdichtung (300) im Ausführungsbeispiel den Adapteraufsatz (110) des jeweiligen Schlittens (100, 101).

Die einzelne Führungsnutdichtung (300) besteht im Wesentlichen aus zwei Teilen pro Schlitten (100, 101): dem Dichtungsträger (331, 332) und dem Dichtungskörper (301, 302). Der Dichtungsträger (331, 332) ist ein aus einem rostfreien Stahl gestanzter Blechwinkel, der einen langen Schenkel (333) und einen kurzen Schenkel (334) hat. Der Blechwinkel ist schmäler als die Nutbreite der abzudichtenden Führungsnut (21).

Der lange Schenkel (333) hat eine rechteckige Positionierausnehmung (335), mit der er im montierten Zustand die Greifbackenmontagebasis des jeweiligen Schlittens (100, 101) umgibt. Der kurze Schenkel (334) besitzt ca. mittig eine Montagebohrung (336) und seitlich jeweils eine Nut (337). Die Montagebohrung dient der Durchführung der die Führungsnutdichtung (300) am Schlitten haltenden Schraube (118). Jede Nut (337) umgibt mit Spiel eine Führungsschiene (31, 32).

Auf jeden Dichtungsträger (331, 332) ist der über diesen ringsherum geringfügig überstehender Dichtungskörper (301, 302) befestigt angeordnet. Der elastische Dichtungskörper (301, 302) dichtet das von der Führungsnut (21) umschlossene Gehäuseinnere (5) entlang der Grundkörperoberseite (12) und entlang der Grundkörperstirnseite (14) zur Umgebung hin ab.

An den Führungsnutwandungen (23-25) liegt der einzelne Dichtungskörper (301, 302) mit einem doppellippigen Profil (303) an. Das Profil (303) hat eine obere, äußere Lippe (305), die als erste Barriere gegen von außen eindringenden Schmutz in Form von Staub und/oder Feuchtigkeit dient. Durch die werkstoffeigene Spannkraft wird die Lippe (305) nach dem Einbau geringfügig nach oben gedrängt. Eine bezüglich Größe und geometrischen Abmessungen vergleichbare Lippe (306) ist zum Gehäuseinnenraum (5) hin geneigt. Sie hat u.a. die Aufgabe, das Schmiermittel des Doppelschiebekeilgetriebes (80) im Gehäuseinnenraum (5) zurückzuhalten. Die Lippe (306) ist zumindest nahezu symmetrisch zur oberen, äußeren Lippe (305) ausgeführt, wobei die in Figur 10 eingezeichnete Achse (307) als Symmetrielinie dient.

Dabei schließen die beiden Dichtlippen (305, 306) einen kanalartigen, z.B. mindestens 0,25 mm tiefen Hohlraum (308) ein, der an der inneren Stirnseite (312) mit einer v-förmigen Öffnung (309) endet. Entlang der inneren Stirnseite (312) weist die Außenseite (311) des Dichtungskörpers (301, 302) eine dritte Dichtlippe (324) auf, die bei einem Verfahren der Schlitten (100, 101) an der Unterseite der Gehäuseabdeckung (18) entlang gleitet. Die Dichtlippe (324), vgl. Figur 11, hat die Form eines Keils, dessen Vorderkante (328) in Richtung der Grundkörpermittellinie (3) weist.

Der Dichtungskörper (301, 302) ist als Kautschukwerkstoff im Ausführungsbeispiel am Dichtungsträger anvulkanisiert. Er kann aber auch als separates Bauteil hergestellt sein, das abschließend auf den Dichtungsträger (331, 332) aufgeklebt wird.

Beim Löse- und/oder Greifhub bewegen sich die Dichtungskörper (301, 302) zusammen mit den Dichtungsträgern (331, 332) und den Schlitten (100, 101) innerhalb der Führungsnut (21) hin und/oder her. Beim Greifhub wirkt die innere Dichtlippe (306) als ein das Schmiermittel vor sich herschiebender Abstreifer. Beim Lösehub übernimmt die äußere Dichtlippe (305) die Aufgabe des die Führungsschiene (31, 32) und die Führungsnut (21) reinigenden Abstreifers.

Für die Schließ- bzw. Greifbewegung wird der Kolben (121), vgl. Figur 2, der sich zusammen mit dem Doppelschiebekeil (81) in seiner oberen Endlage befindet, z.B. mit Druckluft aus dieser Position heraus nach unten bewegt. Dazu wird seine Kolbenstangenseite (123) mit Druckluft beaufschlagt. Der sich nach unten bewegende Doppelschiebekeil (81) zieht die Schlitten (100, 101) in der Führungsnut (21) nach innen zur Mitte hin. Die Kombination aus Kolben (121), Kolbenstange (131, 132) und Doppelschiebekeil (81) wird zusätzlich in den Quernuten (36) der Führungsschienen (31, 32) geführt. Dazu liegen die Stützstege (85, 86) mit einem Spiel, das kleiner ist als 0,05 mm, an den Seitenflanken der Quernuten (36) an. Die Stirnflächen der Stützstege (85, 86) kontaktieren den jeweiligen Nutgrund der Quernuten (36) nicht.

Bei der Schließbewegung kommen die Keilflächen (108) am Doppelschiebekeil (81) zur Anlage. Sobald sich die Greifbacken (1, 2) am Werkstück (7) angelegt haben, stoppt die Bewegung bei einer Aufrechterhaltung der vollen Klemmkraft.

Zum Lösen des Werkstückes (7) wird die Kolbenbodenseite mit Druckluft beaufschlagt. Der sich nach oben bewegende Verbund aus dem Kolben (121) und dem Doppelschiebekeil (81) drückt die Schlitten (100, 101) bzw. die Greifbacken (1, 2) solange auseinander, bis die Kolbenstangenseite (123) am Grund der Zylinderanmehmung (55) zur Anlage kommt. Hier kontaktieren die Keilflächen (107) bei der Lösebewegung den Doppelschiebekeil (81).

Zur Erhöhung der Klemm und Lösekraft können z.B. im Zylinder mehrere Kolben hintereinander angeordnet werden. Auch ist es möglich, den Kolben in mindestens einer Hubrichtung mittels einer mechanischen Feder anzutreiben oder zusätzlich zu unterstützen.

### Bezugszeichenliste:

- 1, 2: Greifelemente, Greifbacken
- 3: Mittellinie zu (10, 34, 82)
- 4: Zylinderinnenraum
- 5: Gehäuseinnenraum, Gehäuseinneres
- 6: Maschinenschlitten, Maschinenteil, Handhabungsgeräteteil
- 7: Werkstück
- 8: vertikale Mittenlängsebene
- 9: Greifrichtung

- 10: Grundkörper, Gehäuse
- 11: Führungsabschnitt
- 12: Grundkörperoberseite
- 13: Grundkörperunterseite
- 14: Grundkörperstirnseite
- 15: Befestigungsbohrungen, vertikal
- 16: Quergangsbohrungen
- 17: Gewindebohrungen für Sperrluft
- 18: Gehäuseabdeckung, Abdeckplatte

- 21: Führungsnut
- 23, 24: Seitenwandungen, Führungsnutwandungen
- 25: Nutgrund, Führungsnutwandungen
- 26: Schienenführungsnut
- 27: Senkbohrung für Schrauben zu (31, 32)
- 28: Passstiftbohrungen
- 31, 32: Führungsschiene, Schlittenführungsschiene
- 33, 34,: Tragflanken
- 35: Fläche zwischen (33) und (34)
- 36: Quernut
- 38: Gewindebohrungen
- 39: Passstiftbohrungen

- 41: Senkschrauben
- 42: Passstifte

- 51: Antriebsabschnitt
- 55: Zylinderausnehmung, oval
- 56: Dichtsitzvertiefung für Flachdichtung
- 57: Bodenbohrungen
- 58: Druckluftbohrungen
- 59: Querbohrung

- 61: Durchgangsbohrung, mittig
- 65: Deckelausnehmung
- 66: Sensorausnehmungen
- 68: Zylinderschrauben für (71)

- 71: Deckel
- 73: Vertiefung
- 75, 76: Sacklochbohrungen, innen, in Flachdichtung
- 77: Querbohrungen
- 78: Befestigungsbohrungen
- 79: Flachdichtung
- 80: Doppelschiebekeilgetriebe
- 81: Doppelschiebekeilelement, Doppelschiebekeil, Getriebebauteil
- 83, 84: Stirnseiten, Stirnflächen, schräg
- 85, 86: Stützstege
- 87: Keilnut
- 91, 92: Keilsteg, T-förmig
- 95: Senkbohrung
- 96: Gewindebohrung

- 100, 101: Schlitten
- 102: Oberseite
- 103: Stirnseite, Stirnfläche
- 105: Schlittenführungsnuten
- 106: T-Nut
- 107: Keilflächen, Öffnungsanlage
- 108: Keilflächen, Schließanlage
- 109: Schmiertaschen

- 110: Adapteraufsatz
- 115: Gewindebohrung für (300)
- 118: Schraube für (300)

- 120: Zylinder-Kolben-Einheit; Antrieb, pneumatisch
- 121: Kolben, oval
- 122: Kolbenbodenseite
- 123: Kolbenstangenseite
- 124: Vorsprung, scheibenförmig, Anschlag
- 125: Vorsprung, kolbenbodenseitig, zylindrisch
- 126: Sacklochbohrungen für (136)
- 127: Druckausgleichsbohrung
- 128: Senkung

- 131: Kolbenstangenhülse, Kolbenstange
- 132: Kolbenstangenschraube, Kolbenstange
- 135: Durchgangsbohrung
- 136: Scheibenmagnete

- 300: Führungsnutdichtung
- 301, 302: Dichtungskörper, Elastomerkörper
- 303: Profil, seitlich
- 304: Doppellippe
- 305: Lippe, außen, Dichtlippe
- 306: Lippe, innen, Dichtlippe
- 307: Symmetrieachse, Mittellinie
- 308: Hohlraum, kanalartig
- 309: Öffnung
- 311: Außenseite
- 312: Stirnseite

- 324: Dichtungslippe, Einfachlippe
- 325: Dichtflanke
- 328: Vorderkante
- 331, 332: Dichtungsträger, Blechwinkel
- 333: Schenkel, lang
- 334: Schenkel, kurz
- 335: Positionierausnehmung
- 336: Montagebohrung
- 337: Nuten

## Patentansprüche

1. Parallelgreifvorrichtung mit bewegliche Greifelemente (1, 2) tragenden Schlitten (100, 101), wobei die Schlitten (100, 101) in Greifrichtung (9) der Greifelemente (1, 2) hintereinander in einer gemeinsam genutzten, in einem Grundkörper (10) angeordneten, zu den Greifelementen (1, 2) hin zumindest bereichsweise offenen Führungsnut (21) parallel zur Greifrichtung (9) zwischen einer Öffnungs- und Schließstellung antreibbar geführt und quer zur Greifrichtung (9) allseitig abstützend gelagert sind,
- wobei die offene Führungsnut (21) zwei einander gegenüberliegende Führungsnutwandungen (23, 24) aufweist,
- wobei in jeder der Führungsnutwandungen (23, 24) eine Schienenführungsnut (26) mit planem Grund angeordnet ist,
- wobei an jeder Schienenführungsnut (26) eine Schlittenführungsschiene (31, 32) befestigt ist und
- wobei der Bereich des Querschnittes der Schlittenführungsschiene (31, 32), der aus der Schienenführungsnut (26) herausragt, einen trapezförmigen Querschnitt aufweist.

2. Parallelgreifvorrichtung gemäß Anspruch 1, **dadurch gekennzeichnet, dass** in den einander gegenüberliegenden Führungsnutwandungen (23, 24) eine flache Schienenführungsnut (26) zur Aufnahme einer Schlittenführungsschiene (31, 32) eingearbeitet ist.

3. Parallelgreifvorrichtung gemäß Anspruch 1, **dadurch gekennzeichnet, dass** die Tiefe der Schienenführungsnut (26) in einem Bereich zwischen 10 und 20 Prozent der Breite der Führungsnut (21) liegt.

4. Parallelgreifvorrichtung gemäß Anspruch 1, **dadurch gekennzeichnet, dass** mindestens eine Schlittenführungsschiene (31, 32) in dem Bereich, der aus der Schienenführungsnut (26) herausragt, eine Quernut (36) zur Führung eines im Grundkörper (10) gelagerten Getriebebauteils (81) aufweist.

5. Parallelgreifvorrichtung gemäß Anspruch 1, **dadurch gekennzeichnet, dass** der Werkstoff der Schlittenführungsschienen (31, 32) einen höheren E-Modul aufweist als der Werkstoff des Grundkörpers (10).

6. Parallelgreifvorrichtung gemäß Anspruch 1, **dadurch gekennzeichnet, dass** der die Schlittenführungsschiene (31, 32) tragende Grundkörper (10) aus einer Aluminiumlegierung gefertigt ist, während die Schlittenführungsschienen (31, 32) aus einem nichtrostenden Stahl hergestellt sind, dessen Nickelanteil unter 2,5 % liegt.

7. Parallelgreifvorrichtung gemäß Anspruch 1, **dadurch gekennzeichnet, dass** im Gehäuse (10) eine Zylinder-Kolben-Einheit (120) angeordnet ist, deren Kolben (121) über eine quer zur Greifrichtung (9) ausgerichtete Kolbenstange (131, 132) ein Doppelschiebekeilelement (81) eines Doppelschiebekeilgetriebes (80) bewegt, wobei das Doppelschiebekeilelement (81) mit seinen Keilflächen an den entsprechenden Keilflächen der Schlitten (100, 101) anliegt.

## Claims

1. A parallel gripping device with carriages (100, 101) that carry movable gripping elements (1, 2), with the carriages (100, 101) being guided behind one another in the gripping direction (9) of the gripping elements (1, 2) in a commonly used guide groove (21), which is arranged in a base body (10) and open toward the gripping elements (1, 2) at least in certain regions, such that they can be driven between an open position and a closed position parallel to the gripping direction (9), and with said carriages being mounted transverse to the gripping direction (9) such that they are supported on all sides,
- wherein the open guide groove (21) has two opposing guide groove walls (23, 24),
- wherein a rail guide groove (26) with a planar base is arranged in each of the guide groove walls (23, 24),
- wherein a carriage guide rail (31, 32) is fastened on each rail guide groove (26), and
- wherein the region of the cross section of the carriage guide rail (31, 32), which protrudes from the rail guide groove (26), has a trapezoidal cross section.

2. The parallel gripping device according to claim 1, **characterized in that** a flat rail guide groove (26) for accommodating a carriage guide rail (31, 32) is produced in the opposing guide groove walls (23, 24).

3. The parallel gripping device according to claim 1, **characterized in that** the depth of the rail guide groove (26) lies in a range between 10 and 20 percent of the width of the guide groove (21).

4. The parallel gripping device according to claim 1, **characterized in that** at least one carriage guide rail (31, 32) has in the region protruding from the rail guide groove (26) a transverse groove (36) for guiding a gear component (81) mounted in the base body (10).

5. The parallel gripping device according to claim 1, **characterized in that** the material of the carriage guide rails (31, 32) has a higher modulus of elasticity than the material of the base body (10).

6. The parallel gripping device according to claim 1, **characterized in that** the base body (10) carrying the carriage guide rail (31, 32) is made of an aluminum alloy whereas the carriage guide rails (31, 32) are made of a stainless steel, the nickel content of which lies below 2.5 %.

7. The parallel gripping device according to claim 1, **characterized in that** a piston-cylinder unit (120) is arranged in the housing (10), wherein the piston (121) of said piston-cylinder unit moves a double-slide wedge element (81) of a double-slide wedge gear (80) via a piston rod (131, 132) that is oriented transverse to the gripping direction (9), and wherein the double-slide wedge element (81) abuts on the corresponding wedge surfaces of the carriages (100, 101) with its wedge surfaces.

## Revendications

1. Dispositif de préhension parallèle avec des coulisseaux (100, 101) portant des éléments de préhension (1, 2) mobiles, sachant que les coulisseaux (100, 101) sont guidés pouvant être entraînés dans le sens de préhension (9) des éléments de préhension (1, 2) l'un derrière l'autre dans une rainure de guidage (21) utilisée en commun, ouverte au moins par endroits vers les éléments de préhension (1, 2), disposée dans un corps de base (10), parallèlement au sens de préhension (9), entre une position d'ouverture et une position de fermeture et sont logés transversalement au sens de préhension (9) s'appuyant de tous côtés,
- sachant que la rainure de guidage (21) ouverte comporte deux parois de rainure de guidage (23, 24) opposées l'une à l'autre,
- sachant que dans chacune des parois de rainure de guidage (23, 24) est disposée une rainure de guidage de rail (26) à fond plan,
- sachant que sur chaque rainure de guidage de rail (26) est fixé un rail de guidage de coulisseau (31, 32), et
- sachant que la zone de la section du rail de guidage de coulisseau (31, 32), qui dépasse de la rainure de guidage de rail (26), comporte une section trapézoïdale.

2. Dispositif de préhension parallèle selon la revendication 1, **caractérisé en ce que** dans les parois de rainure de guidage (23, 24) opposées l'une à l'autre, une rainure de guidage de rail (26) plate est pratiquée pour recevoir un rail de guidage de coulisseau (31, 32).

3. Dispositif de préhension parallèle selon la revendication 1, **caractérisé en ce que** la profondeur de la rainure de guidage de rail (26) est dans une gamme se situant entre 10 et 20 pour cent de la largeur de la rainure de guidage (21).

4. Dispositif de préhension parallèle selon la revendication 1, **caractérisé en ce qu'**au moins un rail de guidage de coulisseau (31, 32) comporte dans la zone, qui dépasse de la rainure de guidage de rail (26), une rainure transversale (36) pour guider un composant de transmission (81) logé dans le corps de base (10).

5. Dispositif de préhension parallèle selon la revendication 1, **caractérisé en ce que** le matériau des rails de guidage de coulisseau (31, 32) comporte un module d'élasticité plus élevé que le matériau du corps de base (10) .

6. Dispositif de préhension parallèle selon la revendication 1, **caractérisé en ce que** le corps de base (10) portant le rail de guidage de coulisseau (31, 32) est fabriqué dans un alliage d'aluminium, alors que les rails de guidage de coulisseau (31, 32) sont réalisés dans un acier inoxydable, dont la part de nickel se situe en dessous de 2,5 %.

7. Dispositif de préhension parallèle selon la revendication 1, **caractérisé en ce que** dans le boîtier (10) est disposée une unité vérin-piston (120) dont le piston (121) déplace un élément à clavette coulissante double (81) d'un mécanisme à clavette coulissante double (80) par le biais d'une tige de piston (131, 132) orientée transversalement au sens de préhension (9), sachant que l'élément à clavette coulissante double (81) est accolé avec ses faces de clavette aux faces de clavette correspondantes des coulisseaux (100, 101).
